## Europäisches Patentamt

## European Patent Office

## Office européen des brevets

(19)

(11) Numéro de publication: **0 021 898**
**B1**

(12) **FASCICULE DE BREVET EUROPEEN**

(45) Date de publication du fascicule du brevet:
**10.08.83**

(51) Int. Cl.³: **G 01 P 15/09, B 04 B 7/06**

(21) Numéro de dépôt: **80400770.6**

(22) Date de dépôt: **30.05.80**

(54) Capteur d'accélération piézoélectrique à élément transducteur en matériau polymère.

(30) Priorité: **29.06.79 FR 7916897**

(43) Date de publication de la demande:
**07.01.81 Bulletin 81/1**

(45) Mention de la délivrance du brevet:
**10.08.83 Bulletin 83/32**

(84) Etats contractants désignés:
**AT BE CH DE GB IT LI LU NL SE**

(56) Documents cités:
**CH-A-493 835**
**FR-A-1 318 937**
**FR-A-2 116 922**
**GB-A-899 235**

(73) Titulaire: **THOMSON-CSF, 173, Boulevard Haussmann,
F-75379 Paris Cedex 08 (FR)**

(72) Inventeur: **Micheron, François, "THOMSON-CSF"
SCPI 173, Bld. Haussmann, F-75360 Paris Cedex 08 (FR)**

(74) Mandataire: **Lepercque, Jean et al, THOMSON-CSF
SCPI 173, Bld Haussmann, F-75379 Paris Cedex 08 (FR)**

Capteur d'accélération piézoélectrique à élément transducteur en matériau polymère

La présente invention se rapporte à un capteur d'accélération piézoélectrique à élément transducteur en matériau polymère.

Un capteur d'accélération piézoélectrique comporte habituellement deux composants principaux: d'une part un transducteur piézoélectrique sous la forme d'un élément plat dont une face est rendue solidaire du boîtier contenant le capteur, et d'autre part une masse M, dite masse sismique, rendue solidaire de l'autre face de l'élément transducteur. La disposition de l'ensemble est telle que, sous l'effet d'une accélération g, la masse M exerce une force Mg sur l'élément piézoélectrique, qui délivre alors à un circuit de mesure une quantité de charge proportionnelle à Mg, donc à g, M étant connu.

Une telle disposition qui associe un élément actif à une masse sismique rapportée est décrite dans le brevet français FR-A-2 116 922. Bien que de façon plus complexe, car il est mis en oeuvre une combinaison de pièces mécanique et de masse fluidique jouant le rôle de masse sismique, cette disposition se retrouve également dans le brevet FR-A-1 318 937.

Enfin dans une autre approche de l'art connu, l'élément actif peut être doté d'une structure massive, de forme cubique par exemple, dans laquelle la totalité du matériau formant cette structure joue également le rôle de masse sismique. Une telle approche est décrite dans le brevet britannique GB-A-899 235.

Dans les dispositifs décrits dans les brevets précités et de façon plus générale dans l'art connu, le matériau piézoélectrique utilisé est en général une céramique ferroélectrique polarisée présentant un fort coefficient piézoélectrique d (exprimé en coulombs par Newton). La réponse de ces capteurs dépend de la température. Le matériau piézoélectrique peut être un monicristal ferro-électrique, ou même du quartz monocristallin, lorsque les impératifs d'indépendance de la tension de sortie du capteur vis-à-vis de la température sont prépondérants. Le prix de revient des capteurs réalisés à l'aide de ces matériaux, et en particulier de ces deux derniers types de matériaux, est élevé. En outre certains capteurs délivrent des signaux de sortie de très faible amplitude, ce qui nécessite es circuits électroniques d'adaptation et d'amplification complexes qui contribuent à en augmenter le prix de revient.

Récemment, sont apparus les polymères piézoélectriques dont les coefficients piézoélectriques d sont intermédiaires entre ceux du quartz (1 à $5.10^{-12}C.N^{-1}$) et ceux des ferro-électriques (100 à $500\ 10^{-12}C.N^{-1}$). On peut citer à titre d'exemple non limitatif, le polyfluorure de vinylidène ($PVF_2$ : d = 10 à $20\ 10^{-12}C.N^{-1}$), le copolymère le polyfluorure de vinylidène-polytétrafluorure d'éthylène ($PVF_2$-PTFE : d = 5 à $10.10^{-12}C.N^{-1}$), le polychlorure de vinyle (PVC : d = 1 à $5.10^{-12}C.N^{-1}$), le polyfluorure de vinyle (PVF : d = 2 à $7.10^{-12}C.N^{-1}$). Ces polymères sont rendus piézoélectriques à partir de la mise en forme après fusion par maintien à une température comprise typiquement entre 80 et 120°C, sous des champs électriques appliqués de 500 KV/cm à plusieurs MV/cm et des temps de polarisation compris entre quelques minutes et quelques heures. Le polymère est ensuite ramené à la température ambiante sous champ électrique (en une demi-heure par exemple).

Ces matériaux polymères présentent l'avantage d'être très bon marché et peuvent être moulés selon des formes quelconques. Or, pour de très nombreuses applications, en particulier dans le domaine dit «grand public», le besoin se fait sentir de disposer d'un capteur d'accélération très bon marché. On peut citer à titre d'exemples non limitatifs: la détection de balourd dans les machines tournantes de type centrifugeuse (par exemple tambour de machine à laver) ou la détection de chocs (par exemple chocs à la fermeture de portes, détection de chocs entre véhicules et obstacles, etc.).

Pour répondre à ces besoins, l'invention a donc pour objet un capteur d'accélération comprenant un élément transducteur en matériau polymère susceptible de présenter des propriétés piézoélectriques après avoir été soumis à un traitement approprié, au moins dans des régions du matériau polymère comprises entre deux électrodes conductrices, aux bornes desquelles se développe une tension électrique en relation avec le déplacement d'une masse sismique soumise à une accélération à détecter; capteur caractérisé en ce que l'élément transducteur ayant la configuration d'un film obtenu par moulage d'un matériau polymère, ce film présente une excroissance (10) en au moins une première région de sa surface constituant ladite masse sismique et une seconde région (11) d'épaisseur plus faible que l'épaisseur de ladite excroissance et couvrant substantiellement le restant de ladite surface constituant un élément actif ladite tension électrique par effet piézoélectrique.

L'invention à encore pour objet un capteur d'accélération comprenant un élément transducteur en matériau polymère susceptible de présenter des propriétés piézoélectriques après avoir été soumis à un traitement approprié, au moins dans des régions du matériau polymère comprises entre deux électrodes conductrices, aux bornes desquelles se développe une tension électrique en relation avec le déplacement d'une masse sismique soumise à une accélération à détecter; capteur caractérisé en ce qu'il se présente sous la forme d'un objet allongé obtenu par moulage d'un matériau polymère disposé suivant sa plus grande dimension autour d'un axe; et en ce que deux électrodes planes, disposées en regard l'une de l'autre dans des plans perpendiculaires à l'axe sont noyés dans le matériau polymère à proximité d'une première extrémité du capteur; la région du matériau polymère comprise entre les électrodes étant rendue active pour présenter des effets piézoélectriques et la région du matériau polymère comprise entre les électrodes et la seconde extrémité du capteur constituant la masse sismique; l'épaisseur de la région comprise entre les deux électrodes planes étant plus faible que celie de la région formant la masse sismique.

L'invention sera mieux comprise et d'autres avantages apparaîtront à la lecture de la description ci-après en se référant aux dessins annexés parmi lesquels:

la figure 1 illustre schématiquement un capteur d'accélération de l'art connu;

les figures 2 à 4 sont relatives à un premier exemple de réalisation selon une première variante d'un capteur de l'invention;

la figure 5 illustre un second exemple de réalisation;

les figures 6 et 7 illustrent un troisième exemple de réalisation;

la figure 8 illustre un exemple de réalisation selon une seconde variante d'un capteur de l'invention.

Dans ce qui suit, les éléments communs à deux ou plusieurs figures portent les mêmes références et ne seront décrit qu'une seule fois.

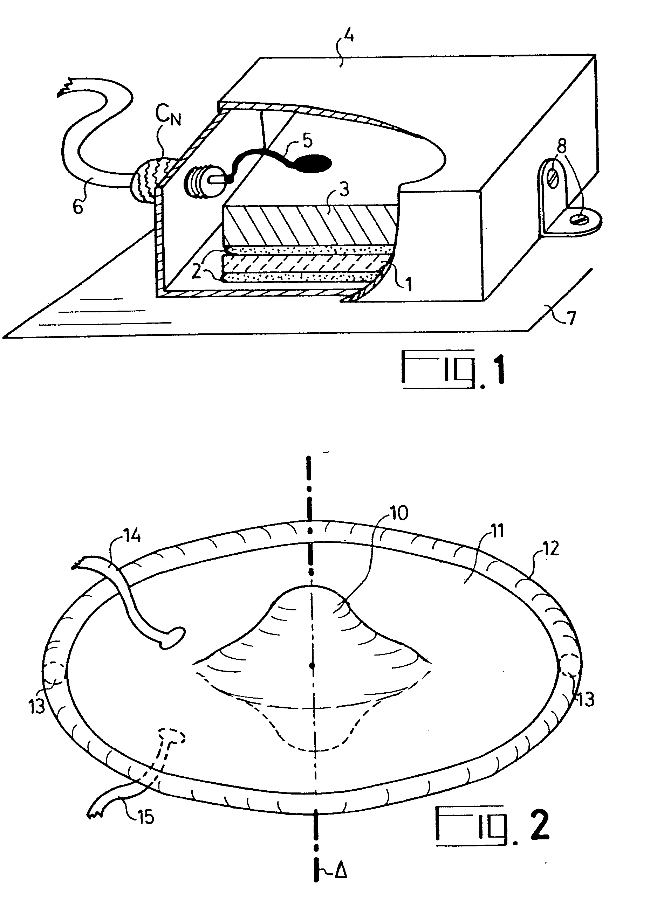

La figure 1 illustre schématiquement la configuration retenue pour la réalisation des capteurs d'accélération selon l'art connu. Un élément transducteur 1, sous la forme d'une lame de faible épaisseur en matériau piézoélectrique, est rendu solidaire d'un boîtier 4 formant une première électrode. Une masse sismique 3, par exemple réalisée en matériau conducteur, est placée sur le transducteur 1 par collage à l'aide de la même colle conductrice 2. Lorsqu'on rend solidaire le boîtier, par des moyens de fixation appropriés 8, à un appareil ou objet soumis à/ou générant des vibrations, il se développe une différence de potentiel entre les électrodes formées respectivement par la masse sismique 3 et par la paroi inférieure du boîtier 4. Cette différence de potentiel est recueillie entre une connexion soudée 5 sur la masse sismique, d'une part, et le boîtier lui-même, d'autre part. Via le connecteur $C_N$ et les cables de sortie 6 (par exemple un cable coaxial) les signaux recueillis aux bornes du transducteur 1 sont transmis à un appareil de mesure approprié.

L'invention va permettre d'intégrer en un élément unique, d'une part le transducteur 1 de la figure 1 et, d'autre part, la masse sismique 3. En outre, le matériau utilisé étant un polymère, ce matériau est très bon marché et se prête à toute opération de moulage désirée.

La figure 2 illustre un premier exemple de réalisation d'un capteur d'accélération de l'invention selon une première variante. Un film réalisé par moulage dans un matériau polymère polaire, par exemple choisi parmi ceux cités précédemment, ou encore parmi les matériaux suivants: polychlorotrifluoéthylène, le copolymère polyfluorure de vinyle-polytétrafluorure d'éthylène ou un polyéthylène chloré composite ayant pour constituants le polyéthylène, le chlorure de polyvinyle ou le polychlorure de vinylidène. Le film, de forme circulaire 11, présente en son centre une excroissante 10 délimitant un volume rempli du même matériau polymère. Cette excroissance constitue la masse sismique.

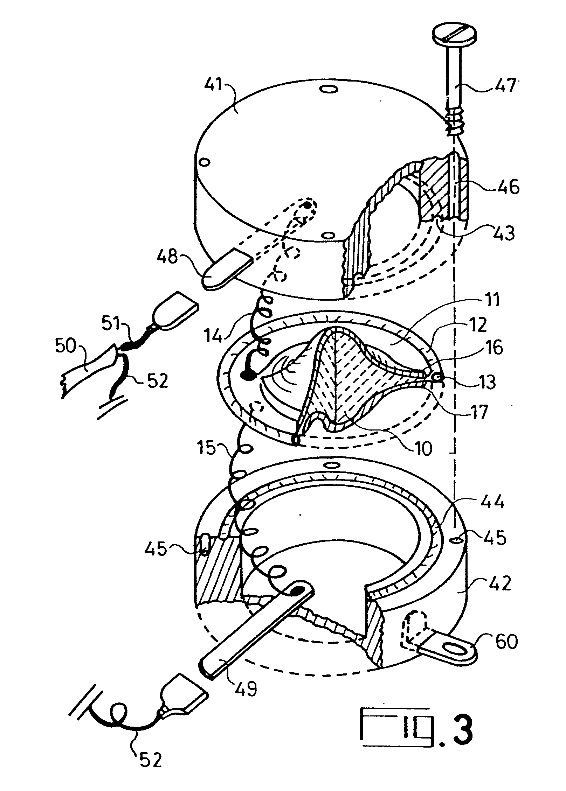

Le film transducteur comporte également une excroissance périphérique 12 de section circulaire 13. Cette excroissance permet de le positionner dans un boîtier, comme illustré sur la figure 3, boîtier cylindrique comprenant deux parties 41 et 42, destinées à être assemblées. Les moyens d'assemblage peuvent être constitués par ceux illustrés sur la figure 3, 47, 46 et 45, ou tout autre moyen approprié. Chacun des demi-boîtiers comporte creusée dans la paroi une gorge annulaire, de section semicirculaire 43 ou 44 de même rayon que l'excroissance 12.

La figure 3 présente en éclaté un capteur réalisé selon l'invention placé dans son boîtier. Des coupes partielles ont été effectuées pour mettre en évidence les éléments cachés.

Au cours du processus de fabrication, après moulage, les deux faces du film transducteur sont métallisées pour former les électrodes 16 et 17. Des fils de liaison 14 et 15 sont ensuite fixés, par exemple par soudure, sur les électrodes ou par collage à l'aide d'une colle conductrice. Dans la variante présentée sur la figure 3, les deux parties du boîtier sont réalisées en matériau isolant. On prévoit alors un connecteur pour sortir les contacts à l'extérieur du boîtier. Des lames métalliques 48 et 49 sont représentées à cet effet sur la figure 3 et un cable de liaison 50 comprenant les deux conducteurs 51 et 52 transmet les signaux recueillis aux bornes du capteur à un instrument de mesure approprié.

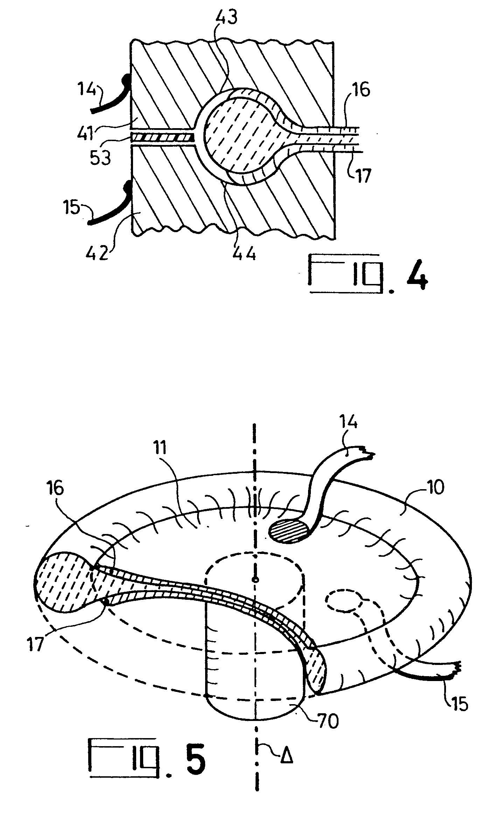

Le boîtier en deux parties peut lui-même comporter des parties métalliques qui, par serrage, assurent directement le contact avec les électrodes du film piézoélectrique comme illustré sur la figure 4. Les fils de contact 14 et 15 peuvent être alors fixés directement sur les deux parties 41 et 42 du boîtier, soit par soudure, soit par vissage ou par tout autre procédé. On peut également prévoir un joint externe 53 isolant pour éviter tout contact électrique intempestif des deux parties du boîtier.

Le film polymère transducteur a subi lors de sa fabrication un traitement lui comminiquant des propriétés piézoélectriques permanentes. Ce traitement a été rappelé précédemment et comporte notamment une phase de polarisation électrique en connectant les deux électrodes à une source d'énergie haute-tension pouvant produire un champ de l'ordre de 1 MV/cm, le film étant porté à une température comprise entre 80 et 120°C. Le film est ensuite ramené à la température ambiante sous champ électrique (en une demi-heure par exemple). Ce procédé d'obtention d'un matériau piézoélectrique est bien connu de l'homme de métier et ne sera pas décrit plus avant.

La figure 5 illustre un second exemple de réalisation d'un capteur d'accélération selon l'invention. Ce capteur présente une excroissance annulaire importante 10 jouant le rôle de masse sismique et réalisée dans le même matériau que la partie centrale 11 jouant le rôle de transducteur. Il s'agit en fait de la structure duale du capteur de la figure 2. Cette structure est auto-portant et est rendue solidaire d'un support rigide 70 qui peut être une des parties du boîtier. L'ensemble possède un axe de révolution $\triangle$. Ce support peut être en matériau conducteur, dans ce cas la connection 15 est omise.

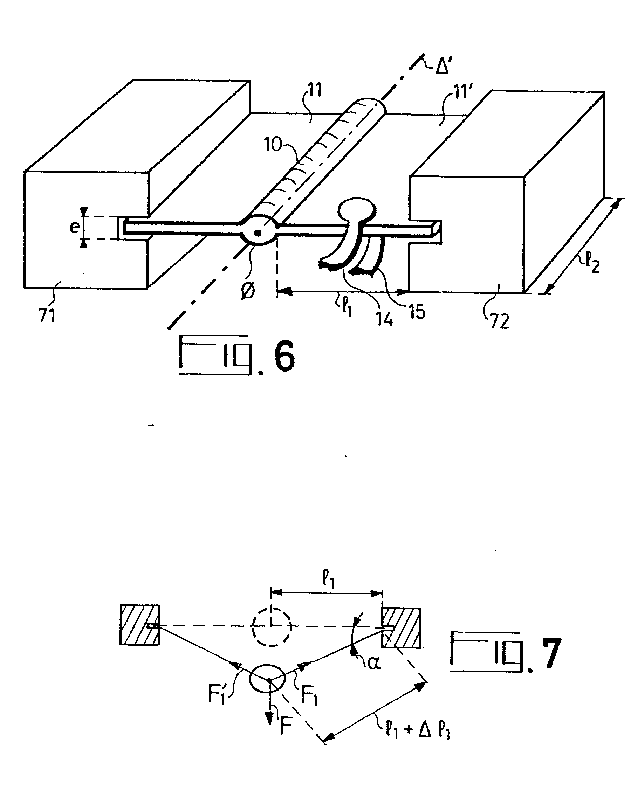

La figure 6 présente un troisième exemple de réalisation selon la première variante de capteur d'accélération de l'invention. Le film en matériau polymère se présente sous la forme d'un parallélépipède rectangle 11 réalisé en matériau polymère et comportant une excroissance centrale sous la forme d'un cylindre 10 de section $\varnothing$ et d'axe de révolution $\triangle'$ parallèle au plan du transducteur 11-11'. Cette excroissance centrale cylindrique divise le transducteur en deux parties égales 11 et 11', pincées en leurs extrémités par deux supports rigides 71 et 72, solidaires du boîtier du capteur.

Un exemple numérique, illustrant le fonctionnement du capteur, va être développé en relation avec cet exemple du réalisation présentant une structure plus simple que les réalisations précédentes.

La masse sismique est composée d'un cylindre de diamètre $\varnothing = 2$ mm et de longueur $l_2 = 1$ cm maintenu au support par les deux ailes 11 et 11', de surface chacune $l_1 \times l_2 = 0,5 \times 1$ cm², et d'épaisseur 30 um. Le matériau est du $PVF_2$ et ses paramètres caractéristiques sont:
— compliance : $s = 2,5 \ 10^{-10}$ m².N⁻¹
— coefficient piézoélectrique transverse :
   $d_{31} = 5 \ 10^{-12}$ C.N⁻¹
— masse spécifique : $P = 1,85 \ 10^3$ Kg/m³
— constante diélectrique : $10^{-10}$ Fm⁻¹.

Lorsque le dispositif subit une accélération g perpendiculaire aux plans 11-11', il s'exerce une force F sur la masse sismique et la force dans le plan de chacune des ailes 11 et 11' est:

$$F_1 \ \# \ (\frac{F^2}{2s}) \ 1/3$$

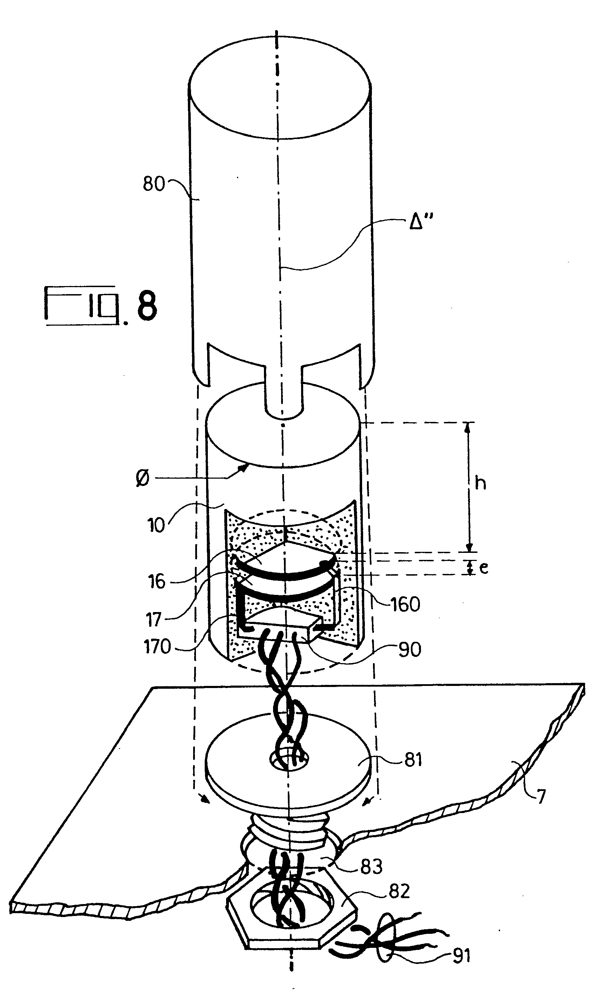

En effet, si on se rapporte aux diagrammes des forces de la figure 7: $l_1$ devient $l_1 + \triangle l_1$, les plans 11 et 11' faisant un angle avec l'horizontale, d'où:

$$\cos \alpha = \frac{l_1}{l_1 + \triangle l_1} = \frac{1}{1 + \frac{\triangle l_1}{l_1}}$$

$$\frac{\triangle l_1}{l_1} = sF_1 \ \text{et} \ F_1 = \frac{F}{2 \sin \alpha} \ \# \ \frac{(F^2)}{2s}^{1/3}$$

Pour une accélération de 1 gramme force:

$$F = \pi \frac{\varnothing^2}{4} L P = 5,85 \ 10^{-5} \ N$$

d'où $F_1 = 1,89$ N.

Cette force exerce une pression X sur la tranche de chaque lame support telle que:

$$X = \frac{F_1}{S} = \frac{F_1}{e \cdot l_1} = 6,3 \ 10^5 \ N \ m^{-2}$$

Il apparaît une densité de charge:
$\sigma = Xd = 3,15 \ 10^{-6}$ C/m²
La capacité des plans 11-11' par unité de surface est donc:
$Y = 3,33 \ 10^{-6}$ Fm⁻²
D'où la tension générée:

$$V = \frac{\sigma}{Y} = 1 \ \text{volt}$$

La tension de sortie de ce capteur n'est pas linéaire mais l'amplitude de cette tension est importante en regard de la simplicité des moyens mis en oeuvre. Dans de nombreuses applications, la non-linéarité ne présente pas d'inconvénients. L'impédance du transducteur étant élevée, il est nécessaire d'adapter cette impédance par exemple en transmettant le signal de sortie à l'entrée d'un transistor de type «MOS FET». Ce transistor peut être placé directement dans le boîtier contenant le capteur. Ceci est également vrai pour les agencements précédemment décrits. Ce capteur est particulièrement avantageux pour la détection de vibrations. Son prix de revient peu élevé se prête aux usages dits «grand public» comme par exemple la détection du balourd d'un tambour de machine à laver. Chaque fabricant recommande une charge maximum de linge à laver. Le dépassement de cette charge peut entraîner un fonctionnement défectueux du moteur d'entraînement ou même sa détérioration. Le boîtier du capteur sera fixé, par exemple à l'aide de pattes de fixation 60 comme illustré sur la figure 3, au châssis solidaire des mouvements du tambour. En général, une machine à laver comprend un châssis fixe et un châssis mobile supporté par des amortisseurs, le châssis mobile comprenant le tambour en rotation. Le capteur de l'invention permet de détecter des vibrations d'amplitude anormale dues à un balourd exagéré du tambour. Pour une telle application, une réponse en «tout ou rien» est suffisante et la non-linéarité du capteur ne présente aucune gêne. Pour un balourd dépassant des normes préétablies, les circuits électroniques associés au capteur comprenant un transistor «MOS FET», transmettant à un relais électrique un signal suffisant pour faire basculer ce relais et couper l'alimentation du moteur en cas de surcharge. Dans un autre mode d'exécution, ce système de sécurité peut également, si le tambour est susceptible de tourner suivant plusieurs régimes de vitesse, interdire le passage à la vitesse supérieure en cas de surcharge détectée. L'application qui vient d'être décrite n'est pas limitée aux machines à laver le linge, elle peut être étendue à toutes machines tournantes du type centrifugeuse.

Un exemple de réalisation selon une seconde variante va maintenant être décrit en relation avec la figure 8. Selon cette variante, le capteur se présente sous la forme d'un objet moulé de structure compacte et par exemple, comme illustré sur la figure 8, sous la forme d'un cylindre. Les électrodes nécessaires à la réalisation de la partie transducteur sont noyées dans le matériau polymère et sont constituées par deux disques métalliques 16 et 17, plans et parallèles. Seule la région compris entre ces deux électrodes, d'épaisseur e, est rendue active. Pour ce faire, on alimente les deux électrodes à l'aide d'une tension élevée de façon à polariser cette région et à induire des propriétés piézoélectriques permanentes selon les procédés qui ont été décrits précédemment. La partie supérieure du capteur, c'est à dire la masse de polymère, sur une hauteur h comprise entre l'électrode supérieure et la face supérieure du capteur, constitue la masse sismique 10.

A titre d'exemple numérique, les paramètres caractéristiques du capteur sont les suivants:

$$\varnothing = 1 \ cm, \ h = 1 \ cm, \ e = 1 \ mm$$

$$\text{Masse sismique} = \frac{\varnothing^2}{4} (h - e) P = 1,3 \ 10^{-3} \ Kg$$

le matériau polymère étant identique à celui utilisé pour la réalisation de la figure 6.

Soit une pression $X = F/S = 66 \ N \ m^{-2}$

Pour une accélération de 1 gramme force, et un coefficient piézoélectrique longitudinal $d_{33}$ = $5.10^{-12}$ $CN^{-1}$, la densité de charges apparaissant sur les électrodes est $\sigma$ = 3,31 $10^{-12}$ C.

La capacité surfacique est donc:

$$\gamma = 10^{-7} \text{ F.m}^{-2}$$

d'où la tension aux bornes des électrodes 16 et 17:

$$v = 33 \mu V.$$

Ce capteur ne bénéficie pas comme les précédents de l'effet d'amplification mécanique. Sa réponse est beaucoup plus faible, mais elle est linéaire.

Comme dans les cas précédents, il faut prévoir un circuit électronique d'adaptation d'impédance, qui doit en outre dans le cas présent assurer l'amplification des signaux recueillis aux bornes des électrodes. Pour ce faire, on peut utiliser un module en circuits hybrides, symbolisé par la référence 90 sur la figure 8, comportant comme étage d'entrée un transistor du type «MOS FET» à forte impédance d'entrée. Ce module peut être noyé dans le matériau polymère. Des liaisons électriques 160 et 170 transmettent au module 90 les signaux électriques recueillis aux bornes des électrodes 16-17. L'ensemble du capteur ainsi réalisé peut être inséré dans un boîtier en deux parties 80-81, de structure analogue à celle retenue habituellement pour les boîtiers des condensateurs électrochimiques. Des câbles de liaisons 91, transmettant à l'extérieur du boîtier du capteur les signaux amplifiés par le module 90 et alimentant celui-ci en énergie électrique nécessaire à son fonctionnement, sont reliés à des circuits extérieurs d'alimentation et d'exploitation des signaux ainsi détectés et amplifiés. Le boîtier peut être fixé à l'aide d'un écrou 82 sur un châssis soumis à/ou générant des vibrations à détecter, châssis dans lequel on aura percé un orifice 83 nécessaire à la fixation. Tout autre mode de fixation peut être utilisé et le boîtier du capteur peut avoir une forme quelconque optimisée pour l'application envisagée. Cet aspect est en dehors du cadre de l'invention.

A titre d'exemple non limitatif, ce capteur, peu coûteux à réaliser, peut également être utilisé pour des applications dites «grand public» telles que détection de chocs aux fermetures de portes, détection de chocs entre véhicules automobiles et obstacles, etc.

L'invention n'est pas limitée aux exemples de réalisation qui viennent d'être décrites. Elle concerne toute application mettant en oeuvre un capteur d'accélération.

## Revendications

1. Capteur d'accélération comprenant un élément transducteur en matériau polymère susceptible de présenter des propriétés piézoélectriques après avoir été soumis à un traitement approprié, au moins dans des régions du matériau polymère comprises entre deux électrodes conductrices (16, 17) aux bornes desquelles se développe une tension électrique en relation avec le déplacement d'une masse sismique soumis à une accélération à détecter; capteur caractérisé en ce que l'élément transducteur ayant la configuration d'un film obtenu par moulage d'un matériau polymère, ce film présente une excroissance (10) en au moins une première région de sa surface constituant ladite masse sismique et une seconde région (11) d'épaisseur plus faible que l'épaisseur de ladite excroissance et couvrant substantiellement le restant de ladite surface constituant un élément actif créant ladite tension électrique par effet piézoélectrique.

2. Capteur selon la revendication 1, caractérisé en ce que les électrodes (16, 17) sont constituées chacune par une pellicule de métal déposée sur les deux faces du film transducteur.

3. Capteur selon l'une quelconque des revendications 1 ou 2, caractérisé en ce que l'élément transducteur étant doté d'une structure de révolution par rapport à un axe ($\triangle$) perpendiculaire au plan du film, l'excroissance (10) se présente sous la forme d'un dôme central, de même axe de révolution.

4. Capteur selon la revendication 3, caractérisé en ce qu'en outre l'élément transducteur présente une excroissance supplémentaire sous la forme d'un anneau périphérique plein (12) de section circulaire (13) et en ce que le film est disposé à l'intérieur d'un boîtier constitué par deux coquilles rigides (41, 42) comportant à l'extrémité de leur paroi des gorges annulaires (43, 44) de section semi-circulaire dans lesquelles vient se placer l'anneau plein (12); les deux coquilles étant assemblées en regard l'une de l'autre et maintenues en place par des moyens de fixation (47).

5. Capteur selon la revendication 4, caractérisé en ce que les deux coquilles rigides (43, 44) sont en matériau électriquement conducteur et assurent chacune un contact électrique avec une des deux électrodes (16, 17) disposées sur les deux faces du film; un joint annulaire périphérique (53) isolant électriquement les deux coquilles l'une de l'autre après assemblage.

6. Capteur selon l'une quelconque des revendications 1 ou 2, caractérisé en ce que l'élément transducteur étant doté d'une structure de révolution par rapport à un axe ($\triangle$ perpendiculaire au plan du film (11) l'excroissance (10) se présente sous la forme d'un anneau périphérique de section circulaire et en ce que l'élément transducteur est couplé mécaniquement, dans sa partie centrale, à un support rigide (70) et maintenu à l'intérieur d'un boîtier par ce support.

7. Capteur selon l'une quelconque des revendications 1 ou 2, caractérisé en ce que l'élément transducteur ayant une forme rectangulaire, l'excroissance (10) se présente sous la forme d'un cylindre d'axe de révolution ($\triangle'$) parallèle à l'un des côtés du rectangle et le divisant en deux parties égales (11, 11'); chacune des extrémités de ces deux parties, parallèles à l'axe de révolution, étant en outre maintenues de façon rigide dans un cadre (71, 72).

8. Capteur d'accélération comprenant un élément transducteur en matériau polymère susceptible de présenter des propriétés piézoélectriques après avoir été soumis à un traitement approprié, au moins dans des régions du matériau polymère comprises entre deux électrodes conductrices, aux bornes desquelles se développe une tension électrique en relation avec le déplacement d'une masse sismique soumise à une accélération à détecter; capteur caractérisé en ce qu'il se présente sous la forme d'un objet allongé obtenu par moulage d'un matériau polymère disposé suivant sa plus grande dimension autour d'un axe ($\triangle''$); et en ce que deux électrodes planes (16, 17), disposées en regard l'une de l'autre dans des plans perpendiculaires à l'axe ($\triangle''$) sont noyées dans le matériau polymère à proximité d'une première extrémité du capteur; la région du matériau polymère comprise entre les électrodes étant rendue active pour présenter des effets piézoélectriques et la région (10) du matériau polymère entre les électrodes et la seconde extrémité du capteur constituant la masse sismique; l'épaisseur (e) de la région comprise entre les deux électrodes planes étant plus faible que celle (h) de la région (10) formant la masse sismique.

9. Capteur selon l'une quelconque des revendications 1 à 8, caractérisé en ce qu'il comprend un circuit électronique d'adaption (90) comportant au moins un premier étage à haute impédance d'entrée.

10. Capteur selon l'une quelconque des revendications 1 à 8, caractérisé en ce que le matériau polymère est choisi parmi les polymères suivants: polychlorure de vinyle, polyfluorure de vinyle, polyfluorure de vinylidène, polychlorotrifluoéthylène, ou les copolymères suivants: polyfluorure de vinyle-polytétrafluorure d'éthylène, polyfluorure de vinyle-polyfluorure de vinylidène ou un polyéthylène chloré composite ayant pour constituants le polyéthylène, le chlorure de polyvinyle et le polychlorure de vinylidène.

**Patentansprüche**

1. Beschleunigungsaufnehmer mit einem Wandlerelement aus Polymermaterial, das piezoelektrische Eigenschaften aufweisen kann, nachdem es einer geeigneten Behandlung unterzogen wurde, und zwar wenigstens in Bereichen des Polymermaterials, die zwischen zwei leitfähigen Elektroden (16, 17) enthalten sind, an deren Anschlüssen eine elektrische Spannung erzeugt wird, die in Beziehung zu der Bewegung einer seismischen Masse steht, welche einer zu erfassenden Beschleunigung unterworfen ist; wobei der Aufnehmer dadurch gekennzeichnet ist, dass das Wandlerelement die Gestalt eines durch Formen eines Polymermaterials erhaltenen Filmes aufweist, der eine Protuberanz (10) in wenigstens einem ersten Bereich seiner Oberfläche aufweist, der die genannte seismische Masse bildet, und einen zweiten Bereich (11) geringerer Dicke als die Dicke der genannten Protuberanz aufweist, welcher im wesentlichen den verbleibenden Teil der genannten Oberfläche einnimmt und ein aktives Element bildet, welches die genannte elektrische Spannung durch piezoelektrischen Effekt erzeugt.

2. Aufnehmer nach Anspruch 1, dadurch gekennzeichnet, dass die Elektroden (16, 17) jeweils durch einen Metallfilm gebildet sind, der auf den beiden Flächen des Wandlerfilms aufgebracht ist.

3. Aufnehmer nach Anspruch 1 oder 2, dadurch gekennzeichnet, dass das Wandlerelement eine rotationssymmetrische Struktur in bezug auf eine Achse ($\triangle$) aufweist, die senkrecht zur Ebene des Films ist, und die Protuberanz (10) die Form einer zentralen Wölbung mit derselben Umdrehungsachse aufweist.

4. Aufnehmer nach Anspruch 3, dadurch gekennzeichnet, dass ferner das Wandlerelement eine zusätzliche Protuberanz in Form eines massiven Umfangsringes (12) kreisförmigen Querschnitts (13) aufweist und dass der Film im Inneren eines Gehäuses angeordnet ist, das aus zwei starren Schalen (41, 42) gebildet ist, welche am Ende ihrer Wandung Ringnuten (43, 44) halbkreisförmigen Querschnitts umfassen, in denen der massive Ring (12) zu liegen kommt, wobei die beiden Schalen einander gegenüberliegend zusammengebaut und durch Befestigungsmittel (47) an Ort und Stelle gehalten werden.

5. Aufnehmer nach Anspruch 4, dadurch gekennzeichnet, dass die beiden starren Schalen (42, 44) aus elektrisch leitfähigem Material sind und jeweils einen elektrischen Kontakt mit einer der beiden Elektroden (16, 17) gewährleisten, die auf den beiden Flächen des Filmes angeordnet sind,; wobei ein Umfangsdichtring (53) die beiden Schalen nach dem Zusammenbau elektrisch voneinander isoliert.

6. Aufnehmer nach einem der Ansprüche 1 oder 2, dadurch gekennzeichnet, dass der Wandler eine rotationssymmetrische Struktur in bezug auf eine Achse ($\triangle$) aufweist, die senkrecht zur Ebene des Films (11) ist, wobei die Protuberanz (10) die Gestalt eines Umfangsringes kreisförmigen Querschnitts aufweist, und dass das Wandlerelement mechanisch in seinem zentralen Teil an einen starren Träger (70) angekoppelt und im Inneren eines Gehäuses über diesen Träger gehalten ist.

7. Aufnehmer nach einem der Ansprüche 1 und 2, dadurch gekennzeichnet, dass das Wandlerelement eine rechtwinklige Form aufweist und die Protuberanz (10) die Gestalt eines Zylinders aufweist, dessen Umdrehungsachse ($\triangle'$) parallel zu einer der Seiten des Rechtecks ist und es in zwei gleiche Teile (11, 11') teilt; wobei jedes der Enden dieser beiden Teile, die parallel zu der Rotationssymmetrieachse sind, ferner starr in einem Rahmen (71, 72) gehalten ist.

8. Beschleunigungsaufnehmer mit einem Wandlerelement aus einem Polymermaterial, das piezoelektrische Eigenschaften aufweisen kann, nachdem es einer geeigneten Behandlung unterzogen wurde, und zwar wenigstens in Bereichen des Polymermaterials, die zwischen zwei leitfähigen Elektroden enthalten sind, an deren Anschlüssen eine elektrische Spannung entsteht, die in Beziehung zu der Bewegung einer seismischen Masse steht, welche einer zu erfassenden Beschleunigung ausgesetzt ist, wobei der Aufnehmer dadurch gekennzeichnet ist, dass er die Gestalt eines gestreckten, durch Formen eines Polymermaterials erhaltenen Gegenstandes aufweist, der längs seiner grössten Abmessung um eine Achse ($\triangle''$) angeordnet ist; und dass die beiden ebenen Elektroden (16, 17), die einander gegenüber in Ebenen angeordnet sind, welche parallel zu der Achse ($\triangle''$) sind, in das Polymermaterial in der Nähe eines ersten Endes des Aufnehmers eingebettet sind; wobei der Bereich des Polymermaterials, der zwischen den Elektroden enthalten ist, aktiv gemacht ist, um piezoelektrische Effekte aufzuweisen, und der Bereich (10) des Polymermaterials, der zwischen den Elektroden und dem zweiten Ende des Aufnehmers liegt, die seismische Masse bildet; wobei die Dicke (e) des zwischen den beiden ebenen Elektroden enthaltenden Bereiches geringer ist als diejenige (h) des die seismische Masse bildenden Bereiches (10).

9. Aufnehmer nach einem der Ansprüche 1 bis 8, dadurch gekennzeichnet, dass er eine elektronische Anpassungsschaltung (90) umfasst, die wenigstens eine erste Stufe mit hoher Eingangsimpedanz aufweist.

10. Aufnehmer nach einem der Ansprüche 1 bis 8, dadurch gekennzeichnet, dass das Polymermaterial ausgewählt ist unter den folgenden Polymeren: Polyvinylchlorid, Polyvinylfluorid, Polyvinylidenfluorid, Polychlorotrifluoräthylen oder den folgenden Copolymeren: Polyvinylfluorid-Polytetrafluoräthylen-Copolymer, Polyvinylfluorid-Polyvinylidenfluorid-Copolymer oder ein chloriertes zusammengesetztes Polyäthylen, das als Bestandteile Polyäthylen, Polyvinylchlorid und Polyvinylidenchlorid aufweist.

## Claims

1. Piezoelectric acceleration sensor comprising a transducer member of polymer material susceptible of presenting piezoelectric properties after having been subjected to an appropriate treatment, at least in regions of the polymer material comprised between two conducting electrodes (16, 17) at the terminals of which an electrical voltage is developed in relation to the movement of a seismic mass subjected to an acceleration to be detected; the sensor being characterized in that the transducer member having the shape of a foil obtained by molding a polymer material, such foil presents a protuberance (10) at least in a first region of its surface forming said seismic mass and a second region (11) of smaller thickness than that of said protuberance and covering substantially the remainder of the surface forming an active element generating said electric voltage by piezoelectric effect.

2. Sensor in accordance with claim 1, characterized in that the electrodes (16, 17) are each formed of a metal coating deposited on both faces of the transducer foil.

3. Sensor in accordance with any of claims 1 or 2, characterized in that the transducer member being provided with a revolution structure with respect to an axis ($\triangle$) perpendicular to the plane of the foil, the protuberance (10) having the shape of a central dome having the same axis of revolution.

4. Sensor in accordance with caims 3, and further characterized in that the transducer member has an additional protuberance formed by a peripheral solid ring (12) of circular section (13), and in that the foil is located inside a housing formed of two rigid shells (41, 42) comprising, at the end of their walls, annular grooves (43, 44) of semi-circular section wherein the solid ring (12) is received; the two shells being assembled one facing the other and held in place by fixing means (47).

5. Sensor in accordance with claim 4, characterized in that the rigid shells (41, 42) are of electrically conducting material, each assuring an electrical contact with one of the two electrodes (16, 17) arranged on both faces of the foil; a peripheral annular seal (53) electrically insulating the two shells from each other after assembly.

6. Sensor in accordance with any of claims 1 and 2, characterized in that the transducer member being provided with a revolution struction with respect to an axis ($\triangle$) perpendicular to the plane of the foil (11), the protuberance (10) being formed of a peripheral ring of circular section, and in that the transducer member is mechanically coupled in its center portion to a rigid support (70) and held inside a housing by said support.

7. Sensor in accordance with any of claims 1 or 2, characterized in that the transducer member having a rectangular shape, the protuberance (10) being of cylindrical shape having an axis of revolution ($\triangle'$) which is parallel to one of the sides of the rectangle and dividing the latter into two equal portions (11, 11'); each end of these two portions which are parallel to the axis of revolution, being rigidly maintained within a frame (71, 72).

8. Acceleration sensor comprising a transducer member of polymer material susceptible of presenting piezoelectric properties after having been subjected to an appropriate treatment, at least within regions of the polymer material comprised between the two conducting electrodes at the terminals of which an electrical voltage is developed in relation to the movement of a seismic mass subjected to an acceleration to be detected; the sensor being characterized in that it has the shape of an elongated member obtained by molding a polymer material arranged along its major dimension around an axis ($\triangle''$); and in that the two plane electrodes (16, 17) facing each other and lying in planes which are perpendicular to said axis ($\triangle''$), are embedded into the polymer material in the neighborhood of a first end of the sensor; the region of the polymer material comprised between the electrodes being rendered active in view of presenting piezoelectric effects, and the region (10) of the polymer material comprised between the electrodes and the second end of the sensor forming the seismic mass; the thickness (e) of the region comprised between the two plane electrodes being less than that (h) of the region (10) forming the seismic mass.

9. Sensor in accordance with any of claims 1 to 8, characterized in that it comprises an electronic matching circuit (90) comprising at least a first high impedance input stage.

10. Sensor in accordance with any of claims 1 to 8, characterized in that the polymer material is selected from the following polymers: polyvinyl chloride, polyvinyl fluoride, polyvinylidene fluoride, polychloro trifluoroethylene, or the following copolymers: polyvinyl fluoride -polytetrafluorethylene, polyvinyl fluoride-polyvinylidene fluoride, or a chlorinated composite polyethylene having the constituents of polyethylene, polyvinyl chloride and polyvinylidene chloride.

Fig. 1

Fig. 2

Fig.3

Fig. 4

Fig. 5

$$\boxed{\mathsf{Fig}} . 6$$

$$\boxed{\mathsf{Fig}} . 7$$

Fig.8